(19) **Europäisches Patentamt**
**European Patent Office**
**Office européen des brevets**

(11) **EP 2 458 167 A1**

(12) **EUROPEAN PATENT APPLICATION**
published in accordance with Art. 153(4) EPC

(43) Date of publication:
**30.05.2012 Bulletin 2012/22**

(51) Int Cl.:
*F01N 3/00* (2006.01)    *F01N 3/18* (2006.01)
*F02D 45/00* (2006.01)

(21) Application number: **09849346.3**

(22) Date of filing: **22.10.2009**

(86) International application number:
**PCT/JP2009/005555**

(87) International publication number:
**WO 2011/048632 (28.04.2011 Gazette 2011/17)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(71) Applicant: **Toyota Jidosha Kabushiki Kaisha Toyota-shi, Aichi 471-8571 (JP)**

(72) Inventor: **MORI, Toshihiro Toyota-shi, Aichi 471-8571 (JP)**

(74) Representative: **Kuhnen & Wacker Patent- und Rechtsanwaltsbüro Prinz-Ludwig-Strasse 40A 85354 Freising (DE)**

(54) **EXHAUST GAS TEMPERATURE MEASURING DEVICE AND EXHAUST GAS TEMPERATURE MEASURING METHOD**

(57)    A temperature sensor is provided in an exhaust passage in an internal combustion engine. A delay in a response from the temperature sensor is compensated for. A change rate is sequentially calculated which is an amount of change in a detected value from the temperature sensor per predetermined time. The calculated change rate is multiplied by a predetermined characteristic value to calculate a correction value. The detected value is corrected based on the calculated correction value. The temperature of the exhaust gas is calculated, which serves as a measured value. The delay in the response from the temperature sensor is compensated for using a simple and practical technique.

**FIG.3**

EP 2 458 167 A1

**Description**

Technical Field

The present invention relates to an apparatus and a method for measuring an exhaust temperature, and in particular, to an apparatus and a method for compensating for a delay in a response from a temperature sensor provided in an exhaust passage in an internal combustion engine to detect the temperature of exhaust gas.

Background Art

An internal combustion engine is generally known in which a temperature sensor configured to detect the temperature of exhaust gas is provided in an exhaust passage so that a detected value from the temperature sensor can be utilized for various types of control. For example, the detected value from the temperature sensor is used to estimate the temperature of an exhaust purification catalyst.

On the other hand, errors mainly caused by a delay in responses from the temperature sensor may occur between the detected value from the temperature sensor and the actual exhaust temperature. Thus, techniques to compensate for the response delay to reduce the error have been developed.

The actual exhaust temperature constantly varies. Thus, it is generally difficult to follow this variation to constantly continue to calculate the accurate exhaust temperature. Some conventional apparatuses carry out the above-described compensation using complicated models. However, these apparatuses are not practical because relevant operations are complicated and involve high arithmetic load and because the apparatuses require time-consuming adaptations. The apparatuses are considered not to be practical particularly when applied to automobiles.

Patent Literature 1 discloses an exhaust temperature sensor containing a heater that is turned on and off depending on the detected value from the exhaust temperature sensor in order to deal with the delay in responses from the exhaust temperature sensor. However, this method disadvantageously increases costs and fuel consumption in association with the use of the heater.

An obj ect of, the present invention is to provide an exhaust temperature measurement apparatus and an exhaust temperature measurement method which enable the delay in responses from the temperature sensor to be compensated for using a simple and practical technique.

Citation List

Patent Literature

PTL 1: Japanese Patent Laid-Open No. 2003-65027

Summary of Invention

According to an aspect of the present invention an exhaust temperature measurement apparatus is provided which is characterized by comprising:

a temperature sensor provided in an exhaust passage in an internal combustion engine to detect a temperature of exhaust gas; and
compensation means for compensating for a delay in a response from the temperature sensor, the compensation means sequentially calculating a change rate that is an amount of change in a detected value from the temperature sensor per predetermined time, multiplying the calculated change rate by a predetermined characteristic value to calculate a correction value, correcting the detected value based on the calculated correction value, and calculating the temperature of the exhaust gas serving as a measured value.

Thus, the apparatus uses the simple correction value comprising the product of the change rate and the characteristic value to correct the detected value, thus calculating the exhaust gas temperature serving as a measured value. Hence, the delay in the response from the exhaust temperature sensor can be compensated for using a simple and practical technique.

Preferably, the compensation means corrects the detected value by adding the correction value to the detected value.

The correction value indicates the error between the detected value from the temperature sensor and the actual exhaust gas temperature. Thus, detection errors based on response delay can be suitably avoided by adding the correction value to the detected value to correct the detected value.

Preferably, the exhaust temperature measurement apparatus further comprises determination means for comparing the change rate calculated by the compensation means with a predetermined normal range to determine whether or not the temperature sensor is abnormal.

The apparatus can determine whether or not the temperature sensor is abnormal, and an appropriate measure can be taken.

Preferably, when a state of abnormality affirmatively determined by the determination means lasts for a time shorter than a predetermined first time, the compensation means holds the correction value calculated immediately before start of the determination, after start of the affirmative determination for the abnormality.

Preferably, when the state of abnormality affirmatively determined by the determination means to be abnormal lasts for a time equal to or longer than the predetermined first time and shorter than a predetermined second time, the compensation means suspends correction of the detected value after the first time elapses.

Preferably, when the state of abnormality affirmatively determined by the determination means lasts for a time equal to or longer than the second time, the compensation means suspends correction of the detected value after the second time elapses and determines the temperature sensor to be defective.

Preferably, the exhaust temperature measurement apparatus further comprises estimation means for estimating the temperature of the exhaust gas based on a parameter indicative of an operational status of the internal combustion engine, and the compensation means sets the normal range based on the exhaust gas temperature estimated by the estimation means.

Preferably, the exhaust gas temperature measurement apparatus further comprises reducing agent addition means provided upstream of the temperature sensor to add a reducing agent into the exhaust passage, and when the reducing agent is added by the reducing agent addition means, the compensation means holds the correction value calculated around an addition start time.

Preferably, the exhaust gas temperature measurement apparatus comprises time constant detection means for detecting a time constant for the temperature sensor at least when the internal combustion engine is started or stopped, and the compensation means corrects the detected value based on the time constant detected by the time constant detection means.

Another aspect of the present invention an exhaust gas temperature measurement method is provided which comprises:

a first step of allowing a temperature sensor provided in an exhaust passage in an internal combustion engine to detect a temperature of exhaust gas; and

a second step for compensating for a delay in a response from the temperature sensor, the second step comprising sequentially calculating a change rate that is an amount of change in a detected value from the temperature sensor per predetermined time, multiplying the calculated change rate by a predetermined characteristic value to calculate a correction value, correcting the detected value based on the calculated correction value, and calculating the temperature of the exhaust gas, which serves as a measured value.

The present invention effectively allows the delay in the response from the temperature sensor to be compensated for using the simple and practical technique.

Brief Description of Drawings

[Fig. 1] Fig. 1 is a diagram schematically showing an internal combustion engine according to an embodiment of the present invention;

[Fig. 2] Fig. 2 is a sectional view showing the details of an exhaust temperature sensor;

[Fig. 3] Fig. 3 is a graph showing the relationship between a change rate and an error in a detected value;

[Fig. 4] Fig. 4 is a time chart showing an error in change rate resulting from execution of addition;

[Fig. 5] Fig. 5 is a time chart showing the transition of a change rate corresponding to each type of abnormality;

[Fig. 6] Fig. 6 is a map used to calculate a work conversion efficiency;

[Fig. 7] Fig. 7 is a flowchart of an abnormality determination process according to the present embodiment; and

[Fig. 8] Fig. 8 is a time chart showing the transition of the detected value from the exhaust temperature sensor obtained when the engine is stopped.

Description of Embodiments

An embodiment for carrying out the present invention will be described below with reference to the attached drawings.

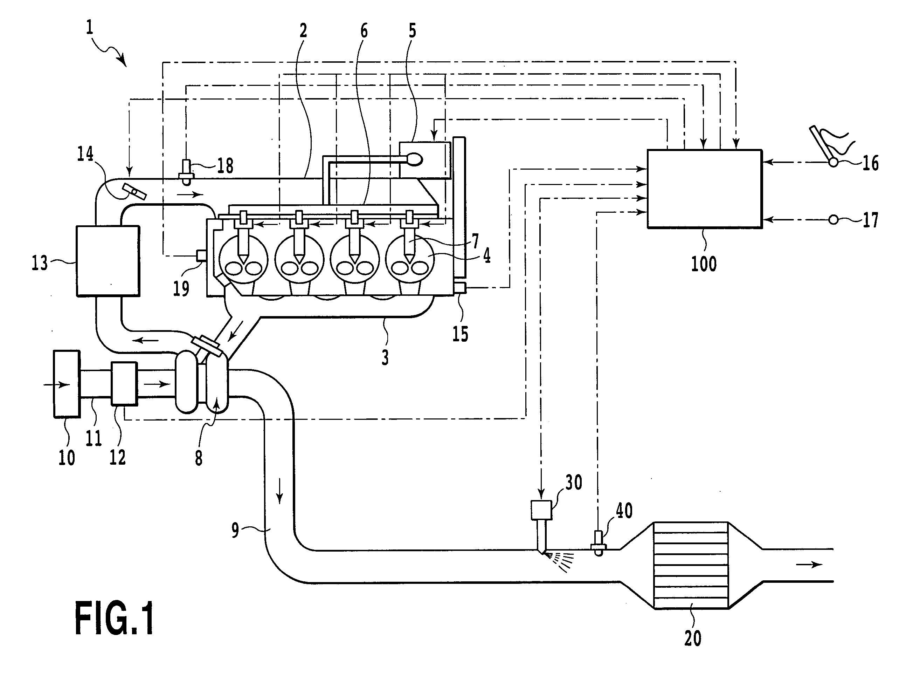

Fig. 1 schematically shows an internal combustion engine according to the embodiment of the present invention. Reference numeral 1 denotes a compression ignition type internal combustion engine, that is, a diesel engine, for automobiles. Reference numeral 2 denotes an intake manifold configured to communicate with an intake port. Reference numeral 3 denotes an exhaust manifold configured to communicate with an exhaust port. Reference numeral 4 denotes a combustion chamber. In the present embodiment, fuel fed from a fuel tank (not shown in the drawings) to a high-pressure pump 5 is fed to a common rail 6 under pressure via the high-pressure pump 5. The fuel is then stored in the common rail 6 at a high pressure. The high-pressure fuel in the common rail 6 is then injected directly into the combustion chamber 4 from an injector 7.

Exhaust gas from the engine 1 flows from the exhaust manifold 3 through a turbo charger 8 to an exhaust passage 9 located downstream of the turbo charger 8. The exhaust gas is then subjected to a purification treatment and discharged to the air. The form of the diesel engine is not limited to the one including such a common rail type fuel injection device. Furthermore, the diesel engine may include any other exhaust purification device such as an EGR device.

On the other hand, intake air introduced into an intake passage 11 through an air cleaner 10 passes through an air flow meter 12, the turbo charger 8, an intercooler 13, and a throttle valve 14 in order and leads to an intake manifold 2. The air flow meter 22 is a sensor configured to detect the amount of intake air. Specifically, the air flow meter 22 outputs a signal corresponding to the flow rate of intake air. The throttle valve 14 adopted is electronically controlled.

The exhaust passage 9 is provided with a selective catalytic reduction (SCR) type NOx catalyst configured to reduce and remove NOx contained in the exhaust gas. The NOx catalyst 20 is formed of a base material, for example, zeolite with rare metal such as Pt carried on the surface thereof.

When fed with a reducing agent comprising urea or ammonia, the NOx catalyst 20 continuously reduces and removes NOx contained in the exhaust gas. In the present embodiment, urea aqueous solution is used as a reducing agent because the urea aqueous solution is easy to use. Furthermore, the NOx catalyst 20 enables NOx to be reduced when the catalyst temperature thereof is within a predetermined active temperature range (for example, between 200°C and 400°C).

A urea addition valve 30 configured to feed urea aqueous solution into the exhaust passage 9 is provided upstream of the NOx catalyst 20. The urea addition valve 30 is fed with the urea aqueous solution from a urea tank (not shown in the drawings) via a pump. The urea addition valve 30 is connected to and controlled by an electronic control unit (hereinafter referred to as the ECU) 100.

A temperature sensor configured to detect the temperature of the exhaust gas, that is, an exhaust temperature sensor 40, is provided downstream of the urea addition valve 30 and upstream of the NOx catalyst 20. An output signal from the exhaust temperature sensor 40 is transmitted to the ECU 100.

Another exhaust purification element may be provided in the exhaust passage 9. The exhaust gas purification element may be, for example, an oxidation catalyst configured to oxidize and purify unburned components (particularly HC) contained in the exhaust or a particulate filter configured to collect particulates (PM) such as soot contained in the exhaust.

The ECU 100 includes a CPU, ROM, a RAM, an I/O port, a storage device, and the like. The ECU 100 controls an injector 7, a high-pressure pump 5, the throttle valve 14, and the like so that the engine is controlled based on detected values from sensors and the like. Furthermore, the ECU 100 controls the urea addition valve 30 in order to control the amount of urea added. The sensors and the like connected to the ECU 100 include the air flow meter 12 and the exhaust temperature sensor 40 described above.

The ECU 100 connects further to a crank angle sensor 15, an accelerator opening sensor 16, an outside temperature sensor 17, an intake temperature sensor 18, and a water temperature sensor 19. The crank angle sensor 15 outputs a crank pulse signal to the ECU 100 while a crank shaft is rotating. Based on the crank pulse signal, the ECU 100 detects the crank angle of the engine and calculates the rotation speed of the engine 1. The accelerator opening sensor 16 outputs a signal corresponding to the opening degree (accelerator opening degree) of the accelerator pedal operated by a user, to the ECU 100. The outside temperature sensor 17, the intake temperature 18, and the water temperature sensor 19 output signals respectively corresponding to the outside temperature, the intake temperature, and the water temperature to the ECU 100.

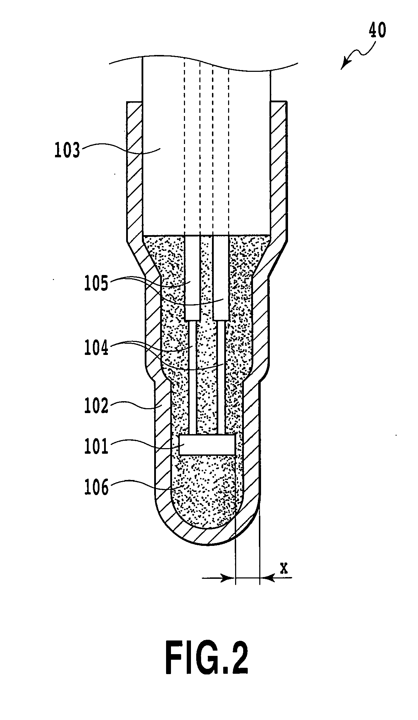

Fig. 2 shows the structure of a tip portion of the exhaust temperature sensor 40 located in the exhaust passage 9. The exhaust temperature sensor 40 includes a temperature-sensitive element 101 serving as a detection section, a cover 102 configured to accommodate the temperature-sensitive element 101, and a sheath tube 103 to which the cover 102 is coaxially attached. The temperature-sensitive element 101 includes a therrmistor formed of a sintered compact of a semiconductor material mainly containing, for example, Cr-Mn. An electric signal provided by the temperature-sensitive element 101 is transmitted to the ECU 100 via a pair of electrode lines 104 and a pair of signal lines 105. The electrode line 104 and the signal line 105 are connected together by laser welding or the like. For example, the electrode line 104 is formed of a material containing platinum. The signal line 105 is formed of stainless steel. Furthermore, the cover 102 is formed of an inconel material. The cover 102 is filled with a filling material 106. The filling material 106 is formed of an insulation material with a high heat conductivity, and contains, for example, alumina. Additionally, the filling material prevents the temperature-sensitive element 101 from colliding against the cover 102 when the exhaust temperature sensor vibrates.

As described above, errors mainly caused by a delay in responses from the exhaust temperature sensor 40 may occur between an exhaust temperature obtained in the form of a detected value from the exhaust temperature sensor 40 and the temperature of exhaust gas that is atmosphere gas for the exhaust temperature sensor 40. Thus, the present embodiment compensates for the response delay to reduce errors using a simple and practical technique.

In the present embodiment, the ECU 100 sequentially calculates a change rate that is the amount of change in the detected value from the exhaust temperature sensor 40 per predetermined time. The ECU 100 then multiplies the calculated change rate by a predetermined characteristic value to calculate a correction value. Based on the calculated correction value, the ECU 100 corrects the detected value to calculate the temperature of the exhaust gas, which serves as a measured value. The finally calculated exhaust gas temperature serves as a measured value. Thus, the present embodiment can compensate for a delay in responses from the exhaust temperature sensor 40 to reduce errors between the detected value from the exhaust temperature sensor 40 and the actual exhaust temperature.

A compensation method according to the present embodiment will be described in detail. First, a conclusion will be described. The measured value Tg of the exhaust temperature after the response delay compensation is sequentially calculated by the ECU 100 based on the following Expression (1) :

$$Tg = A \times \Delta Ts + Ts \quad \cdots \quad (1)$$

where Ts denotes the exhaust temperature detected by the exhaust temperature sensor 40, that is, the detected value. $\Delta Ts$ denotes the rate of change in detected value Ts indicating the amount of change in detected value Ts per predetermined time. A denotes the predetermined characteristic value. $A \times \Delta Ts$ denotes the correction value. The detected value Ts is corrected based on the correction value. In particular, the detected value Ts is corrected by adding the correction value $A \times \Delta Ts$ to the detected value Ts.

The ECU 100 acquires the detected value Ts and calculates the change rate $\Delta Ts$ and the measured value Tg, at every predetermined operation period $\tau$ (for example, 16ms). When the current value is defined as i and the last value is defined as i-1, the current change rate $\Delta Ts_i$ is calculated by using the following Expression (2):

$$\Delta Ts_i = Ts_i - Ts_{i-1} \quad \cdots \quad (2)$$

As is understood from the expression, the change rate $\Delta Ts_i$ is an amount of change in the detected value Ts per operation period $\tau$. Expression (1) can be rewritten to Expression (1)' below. The change rate $\Delta Ts_i$ and the correction value $A \times \Delta Tsi$ are updated each time.

$$Tg_i = A \times \Delta Ts_i + Ts_i \quad \cdots \quad (1)'$$

Now, the principle of derivation of Expression (1) will be explained. First, the exhaust gas around the exhaust temperature sensor 40 is in a fluidized state. Thus, the heat conduction from the exhaust gas to the cover 102 of the exhaust temperature sensor 40 is expected to be maximized. Hence, it is assumed that the temperature of the cover 102 is substantially equal to that of the exhaust gas (first assumption). The heat conduction from the cover 102 of the exhaust temperature sensor 40 to the detection section (temperature-sensitive element 101) is expected to involve only heat conduction.

Furthermore, for a portion (hereinafter referred to as an in-passage portion) of the exhaust temperature sensor 40 positioned in the exhaust passage 9, the heat capacity and the distance and heat conductivity between the cover 102 and the detection section 101 are constant (second assumption). Here, the distance between the cover 102 and the detection section 101 refers to the shortest distance between the outer surface of the cover 102 and the detection section 101 as shown by x in Fig. 2.

The amount of heat conduction (or thermal flow rate) between the cover 102 and the detection section 101 can be expressed by:

amount of heat conduction = heat conductivity $\times$ (distance between cover and detection section) $\times$ (cover temperature - detected value Ts).

This expression can be rewritten as following Expression (3) using the first assumption.

$$Q = \alpha \times x \times (Tgas - Ts) \quad \cdots \quad (3)$$

In this expression, Q (W) denotes the amount of heat conduction, and $\alpha$ (W/mK) denotes the heat conductivity. x (m) denotes the distance between the cover and the detection section. Tgas (K) denotes the exhaust gas temperature.

On the other hand, when the heat capacity of the in-passage portion is defined as C (J/gK), Expression (4) holds true.

$$\Delta Ts = (Q \times \tau) \div C$$
$$Q = (C \times \Delta Ts) \div \tau \quad \cdots \quad (4)$$

Substituting Expression (3) into Expression (4) results in:

$$(C \times \Delta Ts) \div \tau = \alpha \times x \times (Tgas - Ts)$$
$$(Tgas - Ts) = (C \times \Delta Ts) \div (\tau \times \alpha \times x)$$
$$Tgas = \{C \div (\tau \times \alpha \times x)\} \times \Delta Ts + Ts \quad \cdots \quad (5)$$

Here, based on the above-described assumptions, the heat capacity C and the heat conductivity $\alpha$ are constant, and the operation period $\tau$ and the distance x are also constant. Thus, given:

$$A = \{C \div (\tau \times \alpha \times x)\},$$

Expression (6) holds true.

$$Tgas = A \times \Delta Ts + Ts \quad \cdots \quad (6)$$

Expression (6) is substantially the same as Expression (1) . Thus, Expression (1) can be used to calculate the exhaust gas temperature Tg, which serves as the measured value.

In Expression (1), the correction value A $\times$ $\Delta$Ts indicates an error caused by a delay in a response from the exhaust temperature sensor 40. Expression (1) indicates that the error is in proportion to the change rate $\Delta$Ts.

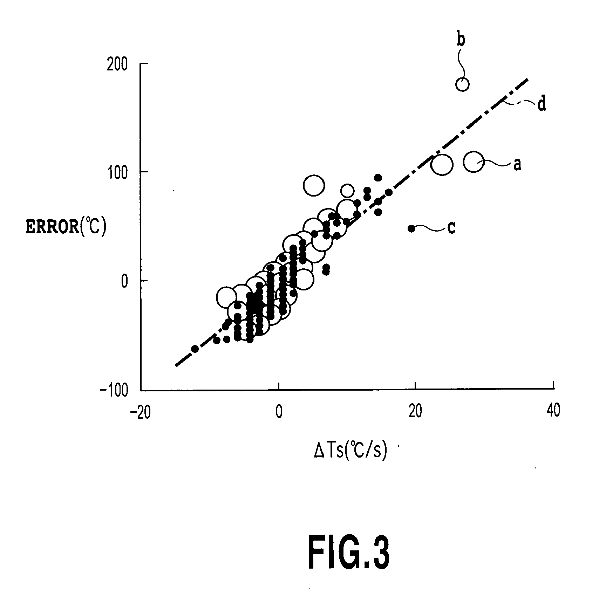

Fig. 3 shows the results of tests illustrating the relationship between the actually detected change rate $\Delta$Ts, (°C/s) and the error (°C) in the detected value Ts. In Fig. 3, points a, b, and c denote data obtained when a vehicle with the engine 1 mounted therein was allowed to travel in an EC mode, in an LA4 mode, and in another particular mode, respectively.

As is understood from the results shown in Fig. 3, the change rate ΔTs and the error are in proportion. An increase in change rate ΔTs increases the magnitude of the error because of the adverse effect of the response delay. An inclination shown by an alternate long and short dash line d corresponds to the above-described characteristic value A. Thus, the tests have also demonstrated that the response delay can be suitably compensated for by the correction value A × ΔTs. The optimum characteristic value A preset through such tests or the like is stored in the ECU 100.

The correction value A × ΔTs indicates the error between the detected value Ts from the exhaust temperature sensor 40 and the actual exhaust gas temperature. Thus, a detection error based on the response delay can be suitably avoided by adding the correction value to the detected value to correct the detected value. Then, the delay in the response from the exhaust temperature sensor 40 can be compensated for or predicted to enable the exhaust gas temperature to be accurately measured. Since the response delay can be compensated for using such a very simple calculation as shown in Expression (1), the detected value Ts from the exhaust temperature sensor 40 can be compensated for using the simple and practical technique. The present embodiment avoids increasing an arithmetic load on the ECU 100 and is suitable for automobiles. The present embodiment also avoids using heaters compared to Patent Literature 1, thus enabling avoidance of an increase in costs and fuel consumption resulting from the use of heaters.

The above-described measurement method involves the first assumption that the cover temperature is substantially equal to the exhaust gas temperature. However, if such an assumption fails to hold true, the magnitude of the error between the measured value Tg and the actual value may increase. This situation may result from, for example, the addition of urea aqueous solution through the urea addition valve 30. In this case, droplets of the added urea aqueous solution adhere to and then evaporate from the cover. At this time, the heat of the cover is conducted away in the form of vaporization heat to reduce the cover temperature. Then, the cover temperature becomes lower than the exhaust gas temperature. The above-described assumption fails to hold true.

Thus, in this case, the ECU 100 holds the correction value calculated around the time of start of the addition. This enables inhibition of a possible measurement error and an increase in the magnitude of the error caused by the adverse effects of the addition.

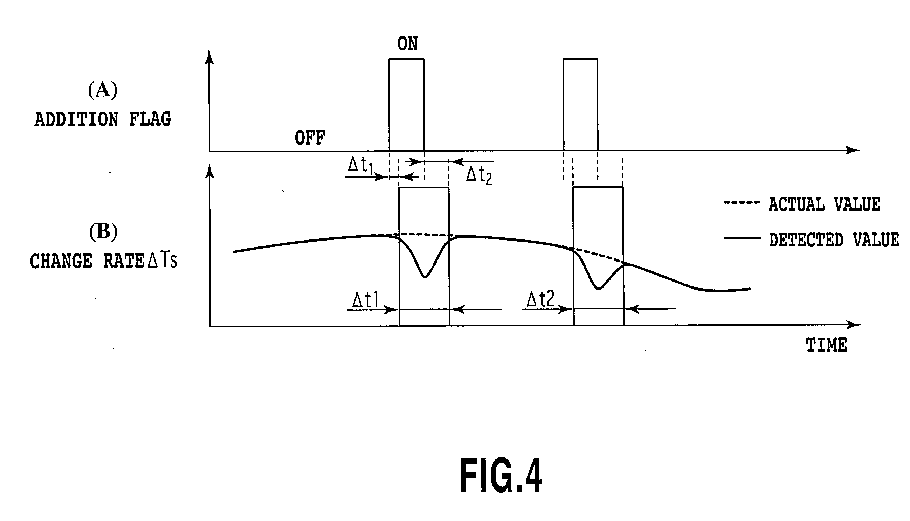

Fig. 4 is a time chart showing an error in change rate ΔTs resulting from execution of the addition. (A) shows the on state and off state of an addition flag. When the addition flag is turned on, the urea addition valve 30 is turned on to add a urea aqueous solution. In contrast, when the addition flag is turned off, the urea addition valve 30 is turned off to stop the addition of the urea aqueous solution. (B) shows the transition of the change rate ΔTs. A dashed line indicates the accurate value (actual value) of the change rate ΔTs calculated from the actual exhaust gas temperature. A solid line indicates the value (detected value) of the change rate ΔTs calculated based on the detected value from the exhaust temperature sensor 40.

As shown in Fig. 4, when the addition is carried out, the detected value of the change rate ΔTs decreases synchronously. This results in a large error between the detected value and the actual value. Thus, if the exhaust gas temperature continues to be measured based on the detected value of the change rate ΔTs as described above, the magnitude of the error in the measured value Tg increases naturally.

Thus, in the present embodiment, when the addition is carried out, the correction value calculated around the time of start of the addition is held during the execution. The correction value hold period is shown in Fig. 4 as periods Δt1 and Δt2. While the correction value is held, the change rate ΔTs and the correction value A × ΔTs are not updated.

In this case, a delay time $\Delta t_1$ based on the distance between the urea addition valve 30 and the exhaust temperature sensor 40 occurs from when the addition is started (that is, from when the addition flag is turned on) until when the detected value starts deviating from the actual value because the added urea aqueous solution reaches the exhaust temperature sensor 40. Similarly, a delay time $\Delta t_2$ occurs from when the addition is ended (that is, from when the addition flag is turned off) until when the detected value almost equal to the actual value because the supply of the urea aqueous solution to the exhaust temperature sensor 40 is stopped,. The delay times $\Delta t_1$ and $\Delta t_2$ are calculated from the detected value of the amount of intake air, which is a substitute value for the exhaust gas flow rate, and the known distance between the urea addition valve 30 and the exhaust temperature sensor 40.

In the present embodiment, from when the delay time $\Delta t_1$ elapses from the start of the addition, the correction value calculated immediately before the time of the elapse is held. The held correction value is used to correct the detected value Ts to calculate the measured value Tg. Then, when the delay time $\Delta t_2$ elapses from the end of the addition, the holding of the correction value is stopped. Thereafter the correction value is subsequently calculated to determine the measured value Tg as usual.

Since the correction value is held as described above, the detected value of the change rate ΔTs can be made closer to the actual value even during execution of the addition. Thus, a possible error can be prevented. The addition is often carried out intermittently and instantaneously. Thus, the deviation of the detected value of the change rate ΔTs from the actual value often occurs instantaneously. Hence, the above-described method of holding the correction value is more advantageous than a method of discarding the correction value (forcibly setting the correction value to zero) in that the adverse effects in the past history can be recorded. However, the method of discarding the correction value can also be adopted.

The correction value can be held from the start until the end of the addition with the delay times $\Delta t_1$ and $\Delta t_2$ not taken into account. In this case, the correction value calculated immediately before the start of the addition is held until the end of the addition.

Next, the present embodiment compares the calculated change rate $\Delta$Ts with a predetermined normal range to also determine whether or not the exhaust temperature sensor 40 is abnormal.

The above-described addition of urea aqueous solution allows determination of whether or not there is a factor causing an error in the measurement of the exhaust temperature depending on whether or not addition has been performed. Thus, the above-described holding of the correction value or the like can be effectively carried out. On the other hand, if it is impossible to determine whether or not there is a factor causing an error in the measurement of the exhaust temperature, for example, if the exhaust temperature sensor 40 is accidentally doused with water or undergoes improper contact, this needs to be detected using a certain method and then dealt with.

The present embodiment notes and utilizes the change rate $\Delta$Ts to determine whether or not the exhaust temperature sensor 40 is abnormal. Then, abnormality can be detected, and an appropriate measures can be taken.

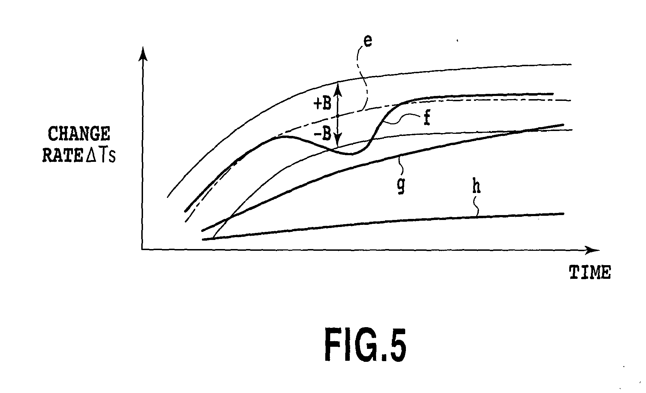

Fig. 5 shows the transition of the change rate $\Delta$Ts corresponding to each type of abnormality. In Fig. 5, line e indicates a reference value corresponding to a determination criterion. The normal range is $\pm\beta$ ($\beta$ is a predetermined positive value) of the reference value e. The normal range will be described below.

In Fig. 5, line f indicates a low level of abnormality at which the change rate $\Delta$Ts deviates from the normal range only for a short time. This corresponds to, for example, the above-described case of the addition of urea aqueous solution. This abnormality is only temporary and is expected to be immediately corrected. Thus, the correction value is held as described above.

Line g in Fig. 5 indicates a medium level of abnormality at which the change rate $\Delta$Ts deviates from the normal range for a long time. This corresponds to temporal degradation of the engine or the exhaust temperature sensor or accidental dousing of the exhaust temperature sensor with water. This abnormality is difficult to correct and thus lasts a long time. Thus, the correction of the detected value Ts is suspended.

Line h in Fig. 5 indicates a high level of abnormality at which the change rate $\Delta$Ts almost constantly deviates from the normal range. This corresponds to, for example, a defect in the exhaust temperature sensor (including improper contact) or extreme degradation of the detection performance caused by accumulated soot. This abnormality is too serious to correct. Thus, the correction of the detected value Ts is suspended. Furthermore, the exhaust temperature sensor is determined to be defective.

Now, the normal range will be described. In the present embodiment, the ECU 100 separately estimates the temperature of the exhaust gas based on a parameter indicative of the operational status of the engine. Then, based on the estimated exhaust gas temperature (estimated exhaust temperature), the reference value e for the change rate is calculated. The range of the reference value e which meets $(e - \beta) \le e \le (e + P)$ is calculated and set to be the normal range. This setting is sequentially carried out.

The exhaust gas temperature is estimated as follows. The term "exhaust gas temperature" as used herein refers to the temperature of the exhaust gas corresponding to atmosphere gas for the exhaust temperature sensor 40, in other words, the temperature of the exhaust gas measured at the position of the exhaust temperature sensor 40.

First, the temperature of exhaust gas generated in the combustion chamber 4, that is, the initial exhaust temperature TeO, is calculated by the following method. First, the amount of heat generation Q1 (J/s) is calculated by using the following Expression (7) :

$$Q1 = Qf \times \varepsilon \quad \cdots \quad (7)$$

where Qf (g/s) denotes the amount of fuel injected and is an internal value or a command value for the ECU 100. $\varepsilon$ (J/g) denotes the amount of heat generated per unit fuel amount and is preset.

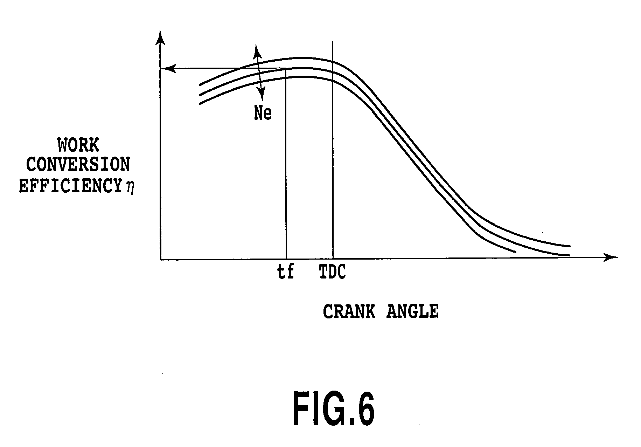

Then, based on a fuel injection timing tf and an engine rotation speed Ne, a work conversion efficiency $\eta$ is calculated with reference to such a predetermined map as shown in Fig. 6. The work conversion efficiency $\eta$ is a value indicative of the rate of the amount of heat converted into the work of the engine relative to the amount of heat generation Q1 , and $0 < \eta < 1$. The work conversion efficiency $\eta$ varies depending on the fuel injection timing tf and the engine rotation speed Ne. Thus, the work conversion efficiency corresponding to the fuel injection timing tf and the engine rotation speed Ne is calculated utilizing the map. The diagram in the map shown in Fig. 6 varies depending on the rotation speed Ne. Based on the map, the ECU 100 determines the work conversion efficiency $\eta$ corresponding to the detected engine rotation speed Ne, and the fuel injection timing tf being an internal value or a command value.

Then, based on the detected amount of intake air Ga and a predetermined specific heat $\xi$, an intake heat

capacity Q2 is calculated using the following Expression (8):

$$Q2 = Ga \times \xi \quad \cdots \quad (8)$$

Finally, based on the calculated amount of heat generation Q1, work conversion efficiency $\eta$, and intake heat capacity Q2 as well as an intake temperature Tin detected by an intake temperature sensor 18, the initial exhaust temperature TeO is calculated by using the following Expression (9):

$$Te0 = \{Q1 \times (1 - \eta)\} / Q2 + Tin \quad \cdots \quad (9)$$

That is, the initial exhaust temperature TeO is a value obtained by adding the intake temperature to the ratio of the amount of heat among the amount of heat generation Q1 which has failed to be converted into the work of the engine, to the intake heat capacity.

Then, the amount of heat Q3 released from when the heat exits the combustion chamber 4 until when the heat reaches the exhaust temperature sensor 40 is calculated. The amount of heat release Q3 is roughly classified into the amount of heat released into cooling water or the like in the engine main body, that is, the first amount of heat release Q31, and the amount of heat released to the air outside the engine main body through an exhaust manifold, an exhaust pipe, and the like, that is, the second amount of heat release Q32.

The first amount of heat release Q31 is calculated based on an initial exhaust temperature Te0 and a water temperature Tw using the following Expression (10):

$$Q31 = (Te0 - Tw) \times v1 \quad \cdots \quad (10)$$

where v1 denotes a predetermined first heat transfer coefficient. Here, heat is also released to lubricant. Thus, the first amount of heat release Q31 may be calculated based on oil temperature. In this case, the oil temperature can be estimated based on the detected water temperature Tw.

Then, the second amount of heat release Q32 is calculated based on the initial exhaust temperature Te0 and a detected outside air temperature Ta using the following Expression (11) :

$$Q32 = (Te0 - Ta) \times v2 \quad \cdots \quad (11)$$

where v2 denotes a predetermined second heat transfer coefficient. Here, for simplification, the initial exhaust temperature TeO is used. However, the exhaust temperature at the outlet of the engine main body (that is, the outlet of the exhaust port or the inlet of the exhaust manifold) may be estimated based on the initial exhaust temperature Te0 so that the estimated exhaust temperature can be used instead of the initial exhaust temperature Te0.

Thereafter, the first amount of heat release Q31 and the second amount of heat release Q32 are added together to calculate the amount of heat release (Q3 = Q31 + Q32). The amount of heat release Q3 is then converted into a temperature decrease amount $\Delta T$ (> 0) based on a predetermined map or function.

Finally, the temperature decrease amount $\Delta T$ is subtracted from the initial exhaust temperature Te0 to calculate the estimated exhaust temperature prevailing at the position of the exhaust temperature sensor 40.

Alternatively, the exhaust gas temperature may be estimated as follows. That is, the relationship between a parameter indicative of the operational status of the engine (for example, the engine rotation speed Ne and the amount of fuel injection Qf) and the exhaust temperature Tgas under steady-state conditions is experimentally predetermined. The relationship is stored in the ECU 100 in the form of a map. Then, the ECU 100 determines based on the map the exhaust temperature Tgas corresponding to the parameter actually detected. Moreover, the exhaust gas temperature Tgas is subjected to primary annealing (moving average) to calculate an estimated exhaust temperature Tgase. When an annealing rate is defined as γ, the estimated exhaust temperature Tgase is calculated by Expression (12). The annealing rate γ is experimentally set.

$$Tgase_i = Tgase_{i-1} + \frac{1}{\gamma} \times (Tgas_i - Tgase_{i-1}) \quad \cdots \quad (12)$$

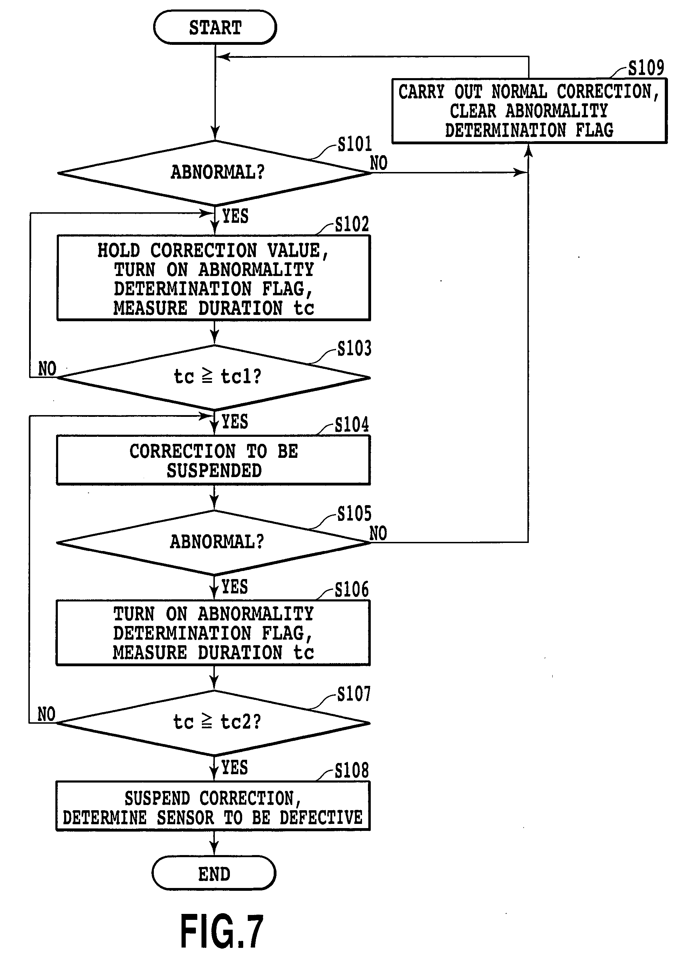

Fig. 7 shows a flowchart of an abnormality determination process according to the present embodiment. The abnormality determination process is carried out by the ECU 100.

First, step S101 determines whether or not the exhaust temperature sensor 40 has been determined to be abnormal, that is, whether or not the change rate ΔTs calculated from the detected value Ts is within the normal range.

If the exhaust temperature sensor 40 has not been determined to be abnormal (if the exhaust temperature sensor 40 has been determined not to be abnormal), the process proceeds to step S109 to carry out normal correction. That is, as described earlier, the measured value Tg is calculated, with the change rate ΔTs and the correction value A × ΔTs updated each time. Furthermore, the abnormality determination flag is cleared (turned off). The abnormality determination flag is on when the exhaust temperature sensor 40 is determined to be abnormal, and is off when the exhaust temperature sensor 40 is determined not to be abnormal.

On the other hand, if in step S101, the exhaust temperature sensor 40 is determined to be abnormal, the process proceeds to step S102 to hold the correction value. That is, the correction value A × ΔTs calculated immediately before the start of an affirmative determination for abnormality is held without being updated after the start of the affirmative determination. Furthermore, the abnormality determination flag is turned on, and a duration tc is measured. The duration tc is a continuous time from the start of an affirmative determination for abnormality. The duration tc is measured using a timer built in the ECU 100.

Then, step S103 determines whether or not the duration tc is equal to or longer than a predetermined first time tc1. If the duration tc is not equal to or longer than a predetermined first time tc1, the process returns to step S102 to repeat carrying out step S102.

On the other hand, if the duration tc is equal to or longer than a predetermined first time tc1, the process proceeds to step S104 to suspend the correction. In this case, the correction value A × ΔTs is forcibly set to zero. The detected value Ts is directly used as the measured value Tg. Alternatively, the change rate ΔTs or the correction value A × ΔTs may be calculated and then discarded and set to zero.

Then, like step S101, step S105 determines whether or not the exhaust temperature sensor 40 has been determined to be abnormal. If the exhaust temperature sensor 40 has not been determined to be abnormal, the process proceeds to step S109. If the exhaust temperature sensor 40 has been determined to be abnormal, the process proceeds to step S106.

In step S106, the abnormality determination flag is turned on and the duration tc is measured as in step S102. If the abnormal state initially determined in step S101 is still present, the duration tc in step S106 is a continuous time from the initial affirmative determination.

Then, step S107 determines whether or not the duration tc is equal to or longer than a predetermined second time tc2. If the duration tc is not equal to or longer than the predetermined second time tc2, the process returns to step S104 to repeat carrying out steps S104 to S106.

On the other hand, if the duration tc is equal to or longer than the predetermined second time tc2, the process proceeds to sep S108 to suspend the correction, while determining that the exhaust temperature sensor 40 is defective. At this time, preferably, a warning device such as a warning lamp is actuated to notify the user of the defect. The processing is thus finished.

As is understood from the above description, if the affirmatively determined state of abnormality lasts for a time shorter than the first time tc1, the correction value calculated immediately before the start of the determination is held after the start of the affirmative determination (or the first affirmative determination). If the affirmatively determined state of abnormality lasts for a time equal to or longer than the first time tc1 and shorter than the second time tc2, the correction of the detected value tc is suspended after the first time tc1 elapses. When the first time tc1 elapses, the holding of the correction value is switched to the suspension of the correction. Moreover, if the affirmatively determined state of abnormality lasts for a time equal to or longer than the second time tc2, then after the second time tc2 elapses, the process suspends the correction of the detected value tc and determines the exhaust temperature sensor 40 to be defective. The correction remains suspended before and after the second time tc2 elapses. However, when the second time tc2 elapses, the sensor is determined to be defective.

Thus, the preferable mode of the compensation method can be implemented depending on the level and type of the abnormality. For the first time tc1 and the second time tc2, the optimum values are determined through experiments or any other means and then stored in the ECU 100. For example, by comparison of the error in the measured value Tg resulting from the holding of the correction value with the error in the measured value Tg resulting from the suspension of the correction, the first time tc1 may be set such that the former is smaller than the latter in magnitude. Furthermore, the second time tc2 may be set with the following taken into account: the adverse effects of the error in the measured value Tg to emissions, the controllability of a control target utilizing the measured value Tg, and the like.

Now, a variation will be described. The exhaust temperature sensor 40 is temporally degraded while in use, with the responsiveness of the sensor 40 gradually decreasing. Furthermore, there may be a manufacture-related variation among the exhaust temperature sensors 40. To enable a reduction in measured value Tg to increase measurement accuracy, the measured value Tb is preferably calculated with such sensor degradation and variation taken into account.

Thus, in the present variation, at least when the engine 1 is started or stopped, a time constant T for the exhaust temperature sensor 40 is detected. Then, the detected vale Ts is corrected based on the time constant T. Thus, the measured value Tg can be calculated with degradation of the exhaust temperature sensor 40 and the like taken into account. As a result, the measurement error can be reduced, and the measurement accuracy can be increased.

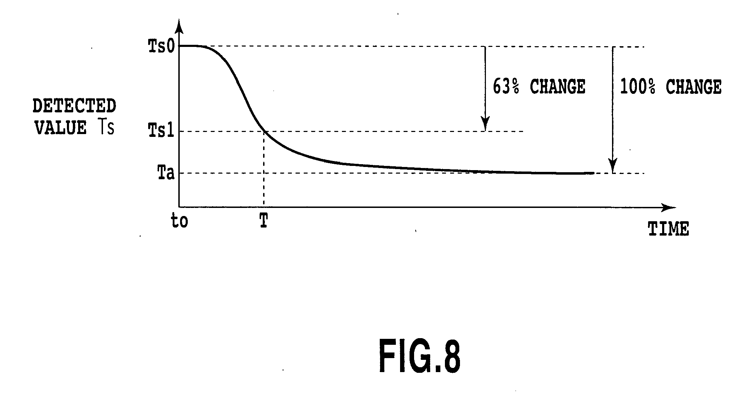

Fig. 8 shows the transition of the detected value Ts from the exhaust temperature sensor 40 obtained when the idling engine 1 is stopped. At time t0, the engine 1 is stopped (that is, fuel injection is stopped). Then, the exhaust temperature sensor 40 is gradually cooled by the outside air, with the detected value Ts gradually decreasing toward the outside temperature Ta. The outside temperature Ta is detected by the outside temperature sensor 17.

Upon reaching the outside temperature Ta, the detected value Ts is determined to have changed 100%. The time T counted from time t0 and at which the detected value Ts has changed by a predetermined rate (in the present embodiment, 63%) is determined to be a time constant. The tendency is that as the exhaust temperature sensor 40 is degraded, the responsiveness varies and the time constant T increases.

The ECU 100 sequentially monitors the detected value Ts from time t0 until a 100% change is completed. The ECU 100 then extracts a detected value from the monitored data which corresponds to a 63% change. The ECU 100 determines the timing of acquisition of this data to be the time constant T, which is then stored in the ECU 100. When the initial detected value obtained at time t0 is defined as Ts0, the detected value Ts1 corresponding to the 63% change is calculated by using the following Expression (13):

$$Ts1 = Ta + (Ts0 - Ta) \times (1 - 0.63) \quad \cdots \quad (13)$$

Then, the ratio R = T / T0 of the detected time constant T to a reference time constant T0 (constant value) that is the time constant for a reference exhaust temperature sensor is determined to be a learning value. The reference exhaust temperature sensor is preferably new. The ratio or leaning value R is updated every time a new time constant T is detected.

On the other hand, the detected value Ts is corrected based on the product of the learning value R and the correction value A × ∆Ts. The measured value Tg of the exhaust gas temperature is calculated by using the following Expression (14):

$$Tg = R \times A \times \Delta Ts + Ts \quad \cdots \quad (14)$$

Expression (14) indicates that as the exhaust temperature sensor 40 is degraded, the time constant T and the learning value R increase and that the detected value Ts is drastically corrected so as to more appropriately avoid the response delay. This enables implementation of the preferred response compensation with possible sensor degradation taken into account.

The engine often idles before being stopped. Thus, the detected value Ts from the exhaust temperature sensor is almost constant, and the initial temperature conditions are often even. Hence, the time constant T depending only on sensor degradation and variation can be relatively accurately obtained by detecting the time constant T for the exhaust temperature sensor when the engine is stopped.

On the other hand, the engine often idles even after being started. Thus, the detected value Ts from the exhaust temperature sensor converges almost to a given value. Terminal temperature conditions are often even. Hence, even when the time constant T for the exhaust temperature sensor is detected when the engine is started, the time constant T depending only on sensor degradation and variation can be relatively accurately obtained

In this case, in contrast to the example shown in Fig. 8, after the starting of the engine is completed, the detected value Ts increases gradually from the initial value (for example, the outside temperature: Ta). Then, when the detected value Ts converges (the change rate $\Delta$Ts is equal to or smaller than a predetermined value close to zero), the detected value Ts is determined to have changed 100%. The time T counted at the time of a 63% change in detected value Ts is detected as a time constant. A method similar to that for the case of the engine stop is used to calculate the learning value and the measured value Tg. Instead of the converged detected value Ts, a value preset through experiments or the like may be determined to be a 100% change value.

To allow the detected value Ts from the exhaust temperature sensor to converge almost to a given value after starting, the engine is preferably started at normal temperature instead of a low or high temperature. Thus, the detection of the time constant T may be executed only when the detected temperature Ts at the time of engine start is within a predetermined normal range (for example, between 15°C and 25°C) .

The timing for detection of the time constant T need not necessarily correspond to the 63% change but may be optionally set. Furthermore, in the above-described example, the 100% change is specified with reference to the outside air temperature. However, in view of the tendency that the initial value obtained when the engine is stopped and the converged value obtained when the engine is started are almost constant, the 100% change may be specified with reference to 0°C and based only on the detected value Ts from the exhaust temperature sensor. This allows the outside air temperature to be omitted. For example, when the engine is stopped, the 63% change may be specified to correspond to the time when the detected value Ts has decreased by 63% of the initial value Ts0. However, this specification is possible only if the error in the measured value Tg calculated using the detected time constant T falls within an allowable range. Moreover, the time constant may be detected at any timing other than that when the engine is started or stopped.

Even in the present variation, the holding of the correction value during the addition (Fig. 4) and the abnormality determination (Fig. 5 to Fig. 7) as described above can be combined together.

The embodiments of the present invention have been described. However, the present invention may adopt other embodiments. For example, the present invention is applicable to an internal combustion engine other than the diesel engine, for example, a spark-ignited internal combustion engine, particularly a gasoline engine. Furthermore, the internal combustion engine may not only be applied to automobiles but also be used for industries or any other applications. Additionally, the exhaust temperature sensor may be installed at any position, for example, downstream of a catalyst. The predetermined time for defining the change rate need not necessarily be equal to the operation period $\tau$ but may be, for example, twice or third times as long as the operation period

The embodiments of the present invention are not limited to those described above. The present invention includes any variations, applied examples, and equivalents embraced in the concepts of the present invention defined by the claims. Thus, the present invention should not be interpreted in a limited manner, but is applicable to any other technique falling within the scope of the concepts of the present invention.

**Claims**

1. An exhaust temperature measurement apparatus **characterized by** comprising:

   a temperature sensor provided in an exhaust passage in an internal combustion engine to detect a temperature of exhaust gas; and
   compensation means for compensating for a delay in a response from the temperature sensor, the compensation means sequentially calculating a change rate that is an amount of change in a detected value from the temperature sensor per predetermined time, multiplying the calculated change rate by a predetermined characteristic value to calculate a correction value, correcting the detected value based on the calculated correction value, and calculating the temperature of the exhaust gas serving as a measured value.

2. The exhaust temperature measurement apparatus according to Claim 1, **characterized in that** the compensation means corrects the detected value by adding the correction value to the detected value.

3. The exhaust temperature measurement apparatus according to Claim 1 or Claim 2, **characterized by** further comprising determination means for comparing the change rate calculated by the compensation means with a predetermined normal range to determine whether or not the temperature sensor is abnormal.

4. The exhaust temperature measurement apparatus according to Claim 3, **characterized in that** when a state of abnormality affirmatively determined by the determination means lasts for a time shorter than a predetermined first time, the compensation means holds the correction value calculated immediately before start of the determination, after start of the affirmative determination for the abnormality.

5. The exhaust temperature measurement apparatus according to Claim 4, **characterized in that** when the state of abnormality affirmatively determined by the determination means lasts for a time equal to or longer than the predetermined first time and shorter than a predetermined second time, the compensation means suspends correction of the detected value after the first time elapses.

6. The exhaust temperature measurement apparatus according to Claim 5, **characterized in that** when the state of abnormality affirmatively determined by the determination means lasts for a time equal to or longer than the second time, the compensation means suspends correction of the detected value after the second time elapses and determines the temperature sensor to be defective.

7. The exhaust temperature measurement apparatus according to any one of Claims 3 to 6, **characterized by** further comprising estimation means for estimating the temperature of the exhaust gas based on a parameter indicative of an operational status of the internal combustion engine, and
in that the compensation means sets the normal range based on the exhaust gas temperature estimated by the estimation means.

8. The exhaust temperature measurement apparatus according to any one of Claims 1 to 7, **characterized by** further comprising reducing agent addition means provided upstream of the temperature sensor to add a reducing agent into the exhaust passage, and
in that when the reducing agent is added by the reducing agent addition means, the compensation means holds the correction value calculated around an addition start time.

9. The exhaust temperature measurement apparatus according to any one of Claims 1 to 8, **characterized by** comprising time constant detection means for detecting a time constant for the temperature sensor at least when the internal combustion engine is started or stopped, and
in that the compensation means corrects the detected value based on the time constant detected by the time constant detection means.

10. An exhaust gas temperature measurement method **characterized by** comprising:

a first step of allowing a temperature sensor provided in an exhaust passage in an internal combustion engine to detect a temperature of exhaust gas; and
a second step for compensating for a delay in a response from the temperature sensor, the second step comprising sequentially calculating a change rate that is an amount of change in a detected value from the temperature sensor per predetermined time, multiplying the calculated change rate by a predetermined characteristic value to calculate a correction value, correcting the detected value based on the calculated correction value, and calculating the temperature of the exhaust gas, which serves as a measured value.

**FIG.1**

**FIG.2**

FIG.3

EP 2 458 167 A1

**(A)**
**ADDITION FLAG**

ON

OFF

$\Delta t_1$  $\Delta t_2$

**(B)**
**CHANGE RATE $\Delta$Ts**

----- ACTUAL VALUE
—— DETECTED VALUE

$\Delta t1$  $\Delta t2$

TIME

# FIG.4

**FIG.5**

**FIG.6**

START

S101
ABNORMAL? — NO →

S109
CARRY OUT NORMAL CORRECTION,
CLEAR ABNORMALITY
DETERMINATION FLAG

YES

S102
HOLD CORRECTION VALUE,
TURN ON ABNORMALITY
DETERMINATION FLAG,
MEASURE DURATION tc

S103
NO ← $tc \geq tc1$?

YES

S104
CORRECTION TO BE
SUSPENDED

S105
ABNORMAL? — NO →

YES

S106
TURN ON ABNORMALITY
DETERMINATION FLAG,
MEASURE DURATION tc

S107
NO ← $tc \geq tc2$?

YES

S108
SUSPEND CORRECTION,
DETERMINE SENSOR TO BE DEFECTIVE

END

# FIG.7

FIG.8

## INTERNATIONAL SEARCH REPORT

| | International application No. |
|---|---|
| | PCT/JP2009/005555 |

**A. CLASSIFICATION OF SUBJECT MATTER**
*F01N3/00*(2006.01)i, *F01N3/18*(2006.01)i, *F02D45/00*(2006.01)i

According to International Patent Classification (IPC) or to both national classification and IPC

**B. FIELDS SEARCHED**

Minimum documentation searched (classification system followed by classification symbols)
F01N3/00, F01N3/18, F02D45/00

Documentation searched other than minimum documentation to the extent that such documents are included in the fields searched
Jitsuyo Shinan Koho             1922-1996   Jitsuyo Shinan Toroku Koho    1996-2010
Kokai Jitsuyo Shinan Koho    1971-2010   Toroku Jitsuyo Shinan Koho    1994-2010

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 7-119514 A  (Nippondenso Co., Ltd.), 09 May 1995 (09.05.1995), claims 1, 2; paragraphs [0020] to [0102] & US 5544639 A            & DE 4430979 A1 | 1-10 |
| A | JP 2006-250945 A  (Honda Motor Co., Ltd.), 21 September 2006 (21.09.2006), claims 13, 14; paragraphs [0068] to [0222] (Family: none) | 1-10 |

| ☐ Further documents are listed in the continuation of Box C. | ☐ See patent family annex. |
|---|---|

| *     Special categories of cited documents: | "T"   later document published after the international filing date or priority date and not in conflict with the application but cited to understand the principle or theory underlying the invention |
|---|---|
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search 18 January, 2010 (18.01.10) | Date of mailing of the international search report 26 January, 2010 (26.01.10) |
|---|---|
| Name and mailing address of the ISA/ Japanese Patent Office | Authorized officer |
| Facsimile No. | Telephone No. |

Form PCT/ISA/210 (second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003065027 A